# EUROPEAN PATENT SPECIFICATION

(11) **EP 2 746 662 B1**
(45) Date of publication and mention of the grant of the patent: **24.04.2019**
(21) Application number: 12871609.9
(22) Date of filing: 18.10.2012
(51) Int. Cl.: F23G 7/06, B01D 53/00, F23L 15/00, B05D 3/02, F26B 3/347

(54) **METHOD AND UNIT FOR APPLYING A PROTECTIVE OR DECORATIVE COATING TO A METAL BAND**
VERFAHREN UND EINHEIT ZUM AUFBRINGEN EINES SCHUTZ- ODER DEKORATIVEN ÜBERZUGES AUF EINEM METALLBAND
PROCÉDÉ ET INSTALLATION DE REVÊTEMENT PROTECTEUR OU DÉCORATIF D'UNE BANDE MÉTALLIQUE

(43) Date of publication of application: 25.06.2014
(73) Proprietor: Fives Stein Bilbao, S.A., 48011 Bilbao (Bizkaia) (ES)
(72) Inventor: BILBAO AURREKOETXEA, Imanol Joseba, 48911 Laukiz (ES); DELAUNAY, Didier, 91650 Breuillet (FR); GARCIA URIONDO, Jon, 48370 Bermeo (ES); LIZARRALDE PEREZ, Amaia, 48920 Portugalete (ES)
(74) Representative: Rebate Conde, Maria Fernanda
(86) International application number: PCT/ES2012/070729
(87) International publication number: WO 2014/060613

(56) References cited:
- WO-A1-2011/128834
- WO-A2-98/09491
- WO-A2-98/09491
- US-A- 4 932 464
- US-A- 5 768 799
- US-A- 5 768 799

## Description

This invention refers to a process for the protective or decorative coating of a metal strip, as well as the installation itself to carry out the said process. It is a subject matter of this invention a process of continuous coating of a metal strip of the type used for the forming of coils and which includes, at least, an induction furnace and a regenerative incinerator.

### PRIOR ART

Coil coating largely consists on baking a thin layer of paint onto a metallic strip (typically steel or aluminium) passing continuously through a tunnel furnace.

This baking process is accompanied by evaporation of the solvents, aqueous or more generally organic, contained in the paint. The volatile organic compounds (VOCs) are continuously diluted and extracted to be incinerated at a high temperature. This incineration occurs in a chamber generally maintained at a temperature between 700°C and 900°C. The combustion energy is provided by the solvents themselves as well as an auxiliary burner.

To prevent the ignition of VOCs in the tunnel furnace and the discharge line, dilution air is injected into the tunnel furnace, as described in the documents FR2734501 and FR2958564. This fresh air is generally preheated by the hot gases produced by the incinerator to reduce the energy required for baking and maintain the internal walls of the tunnel furnace and the discharge pipes at a higher temperature than the condensation temperature of the solvents and in particular the resins. This temperature is typically 150°C for organic solvents and 200°C for epoxy resins. The flow rate of dilution air is limited to the quantity required to maintain the concentration of solvents at all points of the installation at a predefined value of their lower flammability limit (LFL), for example 25% of LFL, so as to reduce the installation's energy consumption.

Baking process consists on heating the strip to a given temperature. The baking may be carried out using various methods, including blowing with hot air, infrared radiation or electromagnetic induction.

Electromagnetic induction is a particularly attractive heating method with numerous advantages, particularly including its high energy efficiency, the compactness of the installation allowing a high line speed and its significant flexibility.

However, as the inductor only heats the strip, it is essential to maintain a sufficient temperature in the tunnel furnace and the discharge line to prevent condensation of VOCs. Since induction baking does not require a hot atmosphere, it is necessary to inject a sufficiently hot gas into the tunnel furnace.

Thermal optimization of the process has resulted in replacing the conventional recovery incinerators by more efficient regenerative incinerators ensuring the purification of the VOCs as well as the recovery of energy in the incinerator.

The regenerative incinerators or RTO (*regenerative thermal oxidizers*) normally comprise three towers, full of porous firebricks. These firebricks store the energy resulting from the combustion of solvents before returning it to the gas to be treated. Communicating the three towers there is a connection chamber equipped with one burner allowing to assure the thermal conditioning of the incinerator prior to the circulation of the gas to be treated.

The operation of the regenerative incinerator is cyclic, each tower functioning alternately. For instance, the gas to be treated coming from the tunnel furnace enters the first tower and circulates from bottom to top. When it passes through the tower, the gas to be treated is preheated by thermal exchange with the firebricks of the tower, which were preheated in the previous cycle.

The gas to be treated then leaves the upper part of the first tower and passes through the connecting chamber to the exit tower. In this chamber is where the temperature to destroy the VOCs is reached, typically 800 °C. After this, and once the thermal transfer with the firebricks of the exit tower is done, the purified gas leaves this tower at a temperature of around 30°C higher than its temperature before treatment.

It has been observed that regenerative incinerators are particularly sensitive in the event that the temperature of the mixture to be incinerated falls below the VOC condensation temperature, which as it has been indicated, is between 150 °C and 200 °C depending on the compound concerned.

Any operation under these conditions implies, or can imply, the reduction of the temperature of the firebricks located in the incinerator below the VOC condensation temperature. This insufficient temperature of the firebricks causes condensates to be deposited on them, resulting in partial clogging of the lower part of the towers of the incinerator. The resulting increase of the pressure loss of the flow of gases in the towers disrupts the functioning of the entire installation. Furthermore, these condensates then become difficult to remove. Therefore, the regenerative incinerator requires the operation with a gas to be treated with a sufficiently high temperature.

The risks of the gas to be treated being at an insufficient temperature before entering the incinerator arise under certain particular circumstances:
a) When painting of the strip has just started: induction heating of the strip allows almost immediate start-up and shutdown of the tunnel furnace. Conversely, during the start-up, the towers of the regenerative incinerator require relatively long prior thermal conditioning to ensure a sufficient temperature is reached to allow purification of the gases. This conditioning time generates operating constraints in the coil coating line and a high fuel consumption. For these reasons, the operator tends to begin the painting before the incinerator is fully thermally conditioned. Furthermore, thermal conditioning of the incinerator is carried out by circulating a small amount of gas so as to reduce fuel consumption. The start of the painting results in a significant and rapid increase in the flow rate of the dilution gas flow, leading to a reduction in the temperature of the gas to be treated at the entrance to the incinerator.
*b)* During transitions resulting in a lack of energy supply, for example a change of strip format or the occasional shutting down of painting of the strip.
c) Occasionally during normal operation if the furnace's thermal balance does not allow to maintain the extracted gas at a sufficient temperature.

The document US 5,768,799 discloses a process and apparatus for the protective or decorative coating of metal sheets, with a continuously moving metal sheet, in which the sheet, after having received its coating, is heated by electromagnetic induction in a tunnel oven in order to evaporate the solvents and to cure the coating. The solvents are continuously extracted from the chamber of the oven, wherein a gas at a temperature greater than the dew point of the solvents is injected into the oven and which is gastight and thermally insulated in order to keep the hot internal walls above this dew point.

The document WO 98/09491 describes a method for processing an air stream using a thermal oxidiser, by pre-heating the air stream, without the use of auxiliary heat, and substantially eliminating the condensation of organic or inorganic compounds within the air stream to be treated. Alternatively, or in combination, the system used for this pre-heat method can also be used to accommodate intermittent higher volumes of organic or inorganic compounds without the need for additional bypass hardware or any unnecessary waste of energy or capital costs.

### EXPLANATION OF THE INVENTION

This invention solves the technical problem derived from the clogging of the towers of the regenerative incinerators due to the low temperatures of the mixture to be incinerated, and largely, consists on the injection of an additional flow Q1 of hot gas at a temperature T1 together with the flow Q2 at a temperature T2 going into the regenerative incinerator, resulting at the regenerative incinerator inlet in a flow Q3 at a temperature T3 higher than the dew point of the resins constituting the VOC.

More in particular, in a first aspect of the invention, a process for the protective or decorative coating of a continuously moving metal strip is provided in accordance with claim 1.

The relationship between flows Q1, Q2 and Q3 and the temperatures T1, T2, and T3 is defined by the equation (Q1 x T1) + (Q2 x T2) = Q3 x T3.

According to the process of the invention, the flow Q1 of hot gas at a temperature T1 is taken from the dilution air circuit. In a particular embodiment of the process of the invention, an auxiliary burner allows to increase the temperature T1 when the temperature of the dilution air is less than the temperature T1.

In a second aspect of the invention, an installation for the protective or decorative coating of a metal is provided in accordance with claim 3.

In a particular embodiment of the installation of the invention, an auxiliary burner allows to increase the injection flow Q1 of hot gas of the injection circuit to the injection temperature T1.

In another particular embodiment of the installation of the invention, the auxiliary burner is placed on the purified gas circuit at the regenerative incinerator outlet and at the inlet of the heat exchanger.

In another particular embodiment of the installation of the invention, the auxiliary burner is placed on the dilution circuit, at the outlet of the heat exchanger and the connection to the injection circuit.

In another particular embodiment of the installation of the invention, the auxiliary burner is placed on the injection circuit.

According to the invention, the injection flow Q1 of hot air at a temperature T1 is taken from the dilution air line, as close as possible to the exchanger outlet so as not to be penalized by a loss of temperature of the dilution air due to the thermal losses in the dilution air circuit.

The auxiliary burner allows to bring the injection flow Q1 of hot gas to the temperature T1 for installation operating scenarios when the temperature of the dilution air is insufficient. This auxiliary burner also allows to reduce the installation's thermal conditioning time before starting the painting of the strip. The auxiliary burner benefits from being an in-duct burner, thereby improving the energy efficiency of the installation. The oxygen required for the auxiliary burner's combustion is totally or partially supplied by the gas circulating in the line on which the auxiliary burner is installed.

Along the description and the claims, the words "consists on/comprises" and its variations do not try to exclude other technical characteristics, additives, components or steps. For the persons skilled in the art, other objects, advantages and characteristics of the invention will be deduced in part from the description and in other part from the practice of the invention. The following examples and drawings are given as illustration, and they don't want to restrict this invention. Moreover, this invention covers all possible combinations of particular and preferred embodiments indicated in this document.

### SHORT DESCRIPTION OF THE FIGURES

FIG 1. Shows a schematic diagram of the installation for the protective or decorative coating of a metal strip, based on prior art, distinguishing in detail the regenerative incinerator (6).
FIG 2. Shows a schematic diagram of the installation for the protective or decorative coating of a metal strip according to a first example of embodiment of the invention.
FIG 3. Shows a schematic diagram of the installation for the protective or decorative coating of a metal strip according to a second example of embodiment of the invention.
FIG 4. Shows a schematic diagram of the installation for the protective or decorative coating of a metal strip according to a third example of embodiment of the invention.
FIG 5. Shows a schematic diagram of the installation for the protective or decorative coating of a metal strip according to a fourth example.

### DETAIL EXPLANATION OF THE EMBODIMENT WAYS AND EXAMPLE

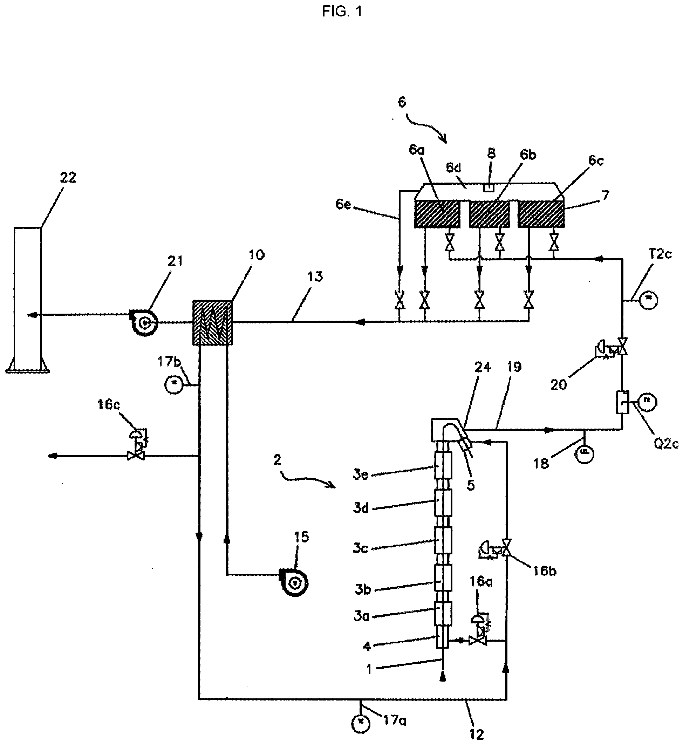

The installations for the protective or decorative coating of a metal strip of the type used nowadays, including a regenerative incinerator (6) are shown in the FIG 1.

The regenerative incinerator (6) of the type used in this invention comprises three towers (6a, 6b, 6c) full of porous firebricks (7). These bricks store the energy resulting from the combustion of solvents before returning it to the gas to be treated, with a flow Q2 at a temperature (T2). The upper section of the incinerator contains a connection chamber (6d) linking the upper part of the three towers (6a, 6b, 6c). This connection chamber (6d) is equipped with at least one burner (8) allowing to assure the thermal conditioning of the incinerator prior to the circulation of the gas to be treated.

The operation of the regenerative incinerator (6) is cyclic, each tower (6a, 6b, 6c) functioning alternately. For instance, at any given point in time t, the gas to be treated coming from the tunnel furnace (2) enters the first tower (6a) via its lower section and circulates from bottom to top. The firebricks (7) contained in this first tower (6a) have been preheated during the previous cycle by the flow from top to bottom of the fumes produced by incineration of the VOCs in the second tower (6b). When it passes through the first tower (6a), the gas to be treated is preheated by thermal exchange with the firebricks (7).

The gas to be treated then leaves the upper part of the first tower (6a) and passes through the connecting chamber (6d) where it reaches the temperature allowing to destroy the VOCs, typically 800°C, before passing through the third tower (6c) from top to bottom, preheating the firebricks (7) contained in this third tower (6c). Once the purified gas has transferred its calories to the firebricks (7), the purified gas leaves the third tower (6c) at a temperature of around 30°C higher than its temperature before treatment at the inlet of the first tower (6a), i.e. the temperature T2 of the inlet flow Q2.

If the gas to be treated contains a sufficient concentration of VOCs, for example 2g/Nm³, the energy resulting from combustion allows the process to be autothermal. If there is an insufficient concentration of VOCs, the burner (8) placed in the connection chamber (6d) provides the additional calories required to reach the incineration temperature (around 800 °C). Beyond a certain concentration of VOCs in the gas to be treated, the energy released by incineration is greater than that required to preheat the firebricks (7).

Some of the purified gas then leaves the incinerator without passing through the active tower preheating the firebricks (7) via a direct outlet (6e) called the "hot bypass", in the upper section of the regenerative incinerator (6). This uncooled gas leaves the incinerator at a high temperature, near 800°C, before being mixed with the remaining gas purified in the regenerative incinerator (6). This direct outlet (6e) prevents excessive heating of the firebricks when the VOC concentration is high, for example above 10g/Nm³, while ensuring that the gas exiting the regenerative incinerator (6) is at a sufficient temperature to preheat the dilution air, in the dilution circuit (12) by means of the exchanger (10).

The duration of a cycle of the regenerative incinerator (6) is approximately 90 seconds. The circulation of gases in towers (6a, 6b, 6c) is controlled by valves operating in cycles such that each tower alternately acts as an entrance, exit and bleeder throughout the regenerative incinerator's (6) period of operation.

The installation is completed with a vertical tunnel furnace (2) with five electromagnetic inductors (3a, 3b, 3c, 3d, 3e) which allow to bring the metallic strip (1) to the desired temperature depending on the type of coating being applied to the strip.

Dilution air, supplied by a fan (15), is injected at each ends (4, 5) of the tunnel furnace (2). This air is preheated by a heat exchanger (10) via exchange with the purified gas coming from the regenerative incinerator (6) through the outlet circuit of purified gases (13). The flow of hot air injected into the tunnel furnace (2) is controlled by two valves (16a, 16b). Dilution circuit (12) also includes a control valve (16c) and sensors to measure the temperature (17a, 17b) so as to adjust the flow and temperature in the dilution circuit (12).

The solvent-charged air is extracted from the upper part of the tunnel furnace (2), at connection point (24), via the extraction circuit (19) and an exhaust fan (21). A sensor (18) for measuring the VOC concentration of the extracted gas makes it possible to adjust the discharge and dilution flow rates, particularly using a control valve (20) and a flow controller (Q2c), so as to maintain the VOC concentration at a level in line with regulations and minimizing the volume of gas extracted from the tunnel furnace (2). The solvent-charged air is then purified in the regenerative incinerator (6) before being sent to the chimney (22).

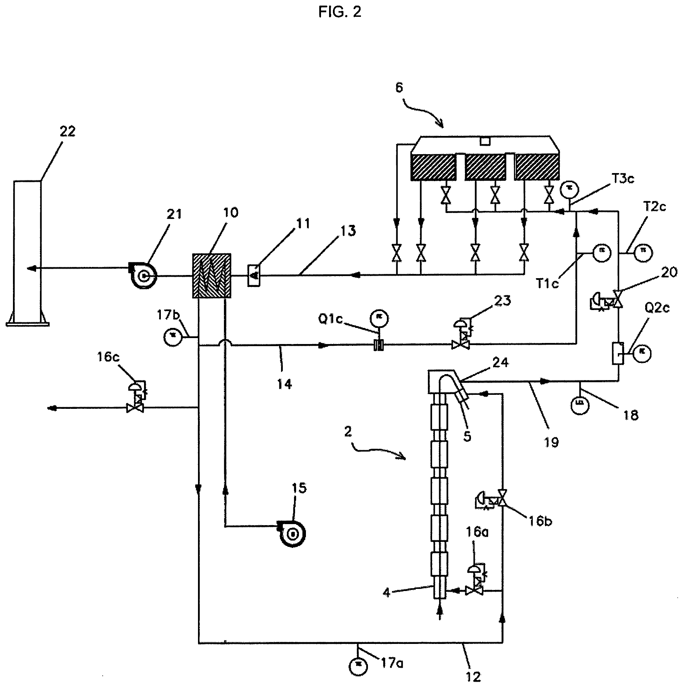

In a first embodiment of the invention, as shown in the FIG.2, the installation for the protective or decorative coating of a metal strip, comprises, largely, an auxiliary burner (11) placed in the inlet of the exchanger (10), in the outlet circuit of purified gases (13) and an injection circuit (14) of hot air in the inlet of the regenerative incinerator (6). This auxiliary burner (11) allows to bring the purified gases to a suitable temperature to allow the preheating of the air in the injection circuit (14) and the dilution circuit (12) to an appropriate temperature such that the gas at the inlet of the regenerative incinerator (6), corresponding with the air coming from the injection circuit (14), together with the one coming from the extraction circuit (19) of the tunnel furnace (2) is always higher than the solvents' condensation temperature.

The flow and temperature of the air passing through the injection line (14) are adjusted by a control valve (23), a flow controller (Q1c) and a sensor (T1c) which measures the temperature T1 of the injected air. On the other hand, the temperature-measurement sensor (T3c) placed at the entrance to the incinerator measures the temperature T3 of the mix between the gas to be incinerated coming from the tunnel furnace (2), at a temperature T2, and the air at a temperature T1 in the injection circuit (14).

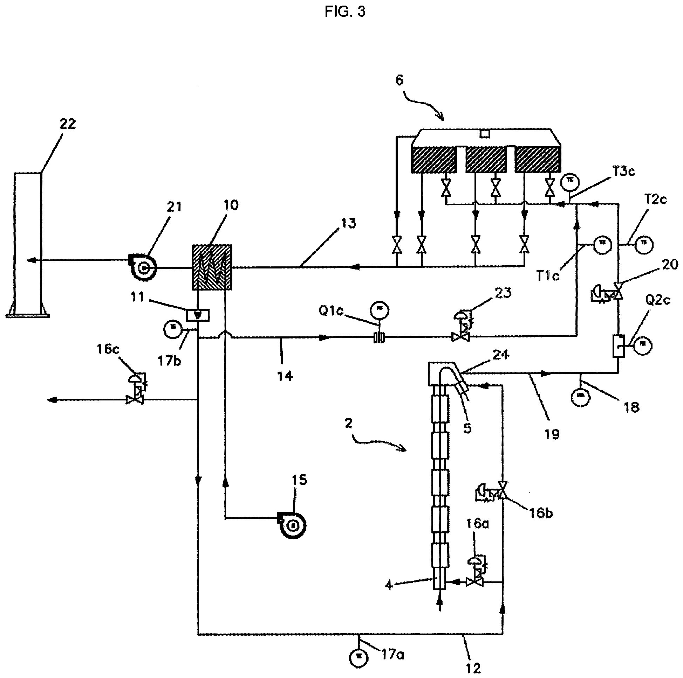

In the example of practical embodiment shown in the FIG.3, the auxiliary burner (11) is placed in the dilution circuit (12) between the exchanger (10) and the connection to the injection circuit (14).

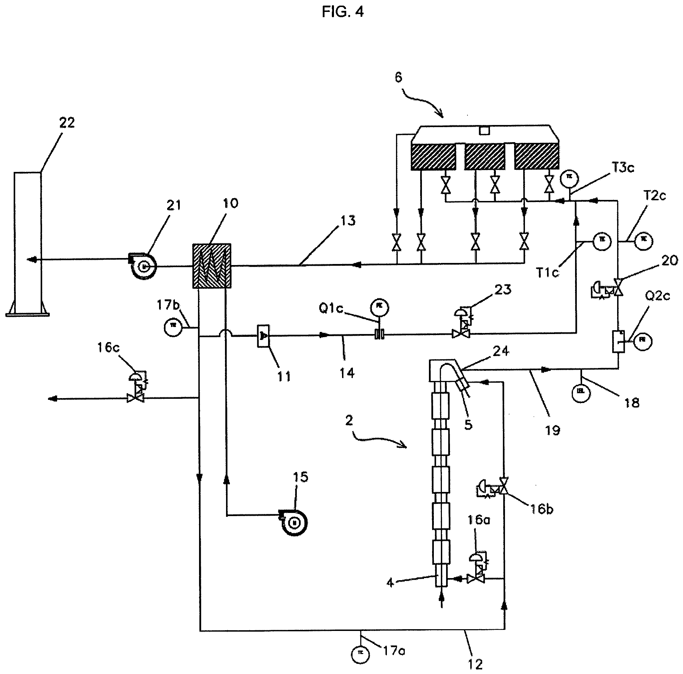

In accordance with a third example of practical embodiment shown in the FIG.4, the auxiliary burner (11) is placed directly in the hot air injection circuit (14) at the inlet of the regenerative incinerator (6).

In an installation configuration such as that represented in the FIG.2 and including the heat exchanger (10), the auxiliary burner (11) can be placed in the purified gas circuit (13) coming from the regenerative incinerator (6), in the inlet of the exchanger (10). For greater energy efficiency, the auxiliary burner (11) can also be placed in the dilution air circuit (12), as represented in the FIG.3, at the outlet of exchanger (10) and upstreams of the connection with the injection circuit (14). Whether or not there is an exchanger (10), the auxiliary burner (11) can also be placed in the injection circuit (14) injecting the flow Q1 of hot gas, as represented in the FIG.4, so as to only increase the temperature of this limited flow of gas Q1.

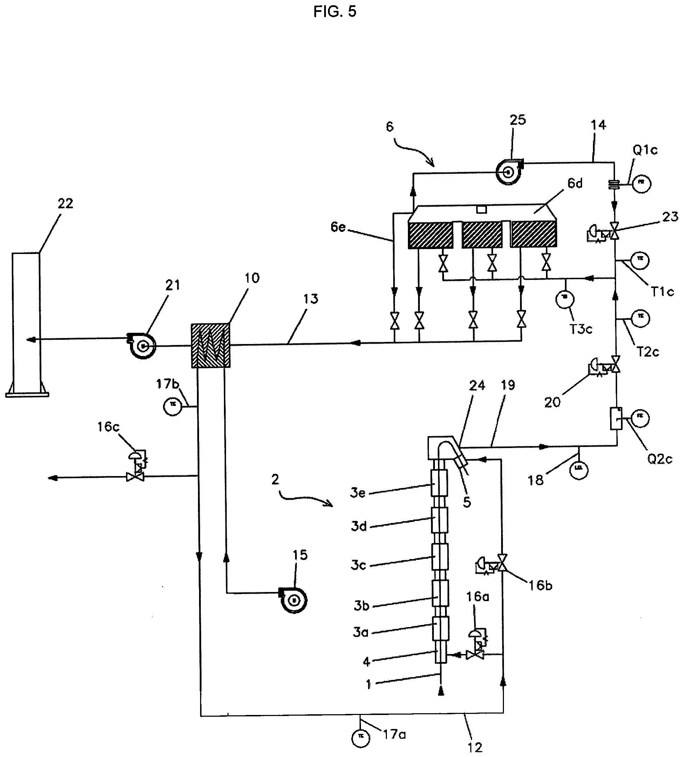

In accordance with an example shown in the FIG.5, the hot air feeding the injection circuit (14) is directly taken from the incinerator's combustion chamber (6d). This solution provides high temperature air and means that an auxiliary burner (11) is not necessary. However it does require the use of an auxiliary fan (25) able to operate at a high temperature. The temperatures T1, T2 and T3 are measured by the temperature sensors (T1c, T2c, T3c) respectively, for example thermocouples. Injection flow Q1 and extraction flow Q2 are measured by flow sensors (Q1c, Q2c), for example Venturi sensors or orifice plates. Sensors to measure the temperature and the pressure of the circulation gas, not shown in the FIG.2, placed near the flow sensors for the injection and extraction (Q1c, Q2c), make it possible to carry out the necessary corrections in the temperature and pressure in order to precisely calculate the flows of injection and extraction gas.

The installation of a flow sensor at the inlet of the incinerator to measure the flow Q3, which would lead to requirements in relation to its installation, particularly sufficient straight lengths of duct upstreams and downstreams and an additional cost, is not necessary since this is calculated by adding together the flows Q1 and Q2. The circuits of the injection flow Q1 and extraction flow Q2 include automatic flow control devices, such as butterfly control valves.

Finally, the installation includes a control and command system allowing to adjust automatically as necessary, the temperatures T1, T2 and T3 and their respective flows Q1, Q2 and Q3.

Obviously, the installation includes sensors to measure the pressure of the gases in the various circuits, required in particular to measure the different flows. For simplification purposes, these devices are not shown in the attached figures and they are not described because they are obvious for a person skilled in the art.

### Example application of the invention

Below an example of practical application of the installation and process of the invention is described. This application is based on the configuration represented in the FIG.2, it being extended to the other practical embodiments indicated, but not limited.

In this example a paint applied continuously to both sides of a steel strip circulating vertically in the tunnel furnace (2) is baked. The strip's thickness varies from 0,3mm to 2mm and its width from 800mm to 1300mm. Its speed is between 30m and 130m per minute and the flow of metal can be up to 40 tons per hour.

In a specific case of dimensioning, a strip 0,58mm thick and 1300mm wide, circulating at a speed of 130m per minute, is heated to approximately 250°C. The tunnel furnace (2) comprises five electromagnetic inductors (3a, 3b, 3c, 3d, 3e) with a total length of 20 metres. At each end, where the strip enters and exits, dilution air is injected having passed through an exchanger (10) placed in the dilution circuit (12) downstreams of the regenerative incinerator (6) and at the outlet is a point (24) for the discharge of solvents located in the upper section of the tunnel furnace (2). The auxiliary burner (11), placed in the purified gas circuit (13) is a in-duct burner with a power of 3000 kW.

For a strip 0,58mm thick and 1300mm wide, circulating at a speed of 130m per minute and with 450 litres of solvents deposited per hour, the implementation conditions of the invention's process are as follows:
Under the established operating conditions, a flow of 34000 Nm³ per hour of air is injected into the tunnel furnace (2), at a temperature of approximately 250°C. The extracted flow Q2 of gas to be treated, loaded in solvents, is 40000 Nm³/h. Its temperature T2 at the inlet of the incinerator is 200°C. Since the temperature of the gas to be incinerated at the inlet of the regenerative incinerator (6) is enough to prevent its condensation on the firebricks (7) regenerative incinerator (6), no air flow Q1 from the injection air circuit (14) is injected at the inlet of the regenerative incinerator (6).

During the phase to rise the installation's temperature, before painting begins, a flow of 16000 Nm³/h of air is injected into the tunnel furnace (2) at a temperature of approximately 200°C. The air flow Q2 extracted from the tunnel furnace (2) is 24000 Nm³/h and its extraction temperature T2 at the entrance to the incinerator is 160 °C. Since this temperature is insufficient to prevent the condensation of the solvents (mainly the resins composing the solvent) when painting begins, an air flow of 8000 Nm³/h coming from the dilution air circuit (14) is injected at the regenerative incinerator (6) entrance. Before injection, the temperature of the purified gas is raised from 250°C to 400°C using the auxiliary burner (11), increasing the temperature of the dilution air up to 300°C. After injection, there is a mixture at the incinerator entrance of 24000 Nm³/h at an inlet temperature T3 of 200 °C, thereby preventing any risk of condensation when painting starts.

After painting begins, the installation gradually achieves a stable operating condition with the reduction of the flow and temperature of the injection air managed by the installation's control system.

When the format of the strip changes, the installation's control system manages the temperature and flow of injected air at the entrance to the regenerative incinerator (6) so as to maintain a temperature of approximately 200 °C for the mixture comprising the gas to be treated from the tunnel furnace (2) and the air injected at the incinerator entrance via the injection circuit (14).

## Claims

1. Process for the protective or decorative coating of a continuously moving metal strip (1), in which, once the strip has been coated, it is heated by electromagnetic induction in a baking tunnel (2) designed to evaporate the solvents and bake the coating; those solvents are continuously extracted from the tunnel furnace (2) using air, the resulting gas to be treated with a flow Q2 and a temperature T2 is sent to a regenerative incinerator (6); wherein an injection flow Q1 at an injection temperature T1 is such that a resulting flow Q3 at the regenerative incinerator inlet (6), which is the addition of the injection flow Q1 and extraction flow Q2, is at a temperature T3 higher than the dew point of the volatile organic compounds; wherein the flow Q1 is zero if the temperature T2 is higher than said dew point of the volatile organic compounds, and wherein the flow Q1 of hot gas at a temperature T1 is taken from a dilution air circuit (12) extending between a heat exchanger (10) and said tunnel furnace (2); said heat exchanger (10) preheating dilution air via exchange with purified gas coming from the regenerative incinerator (6).

2. Process as per claim 1, wherein the temperature T1 is raised by means of an auxiliary burner (11).

3. Installation for the protective or decorative coating of a metal strip (1) by means of a process according any of the previous claims, wherein said metallic strip (1) is moving continuously through the installation, the installation comprising; a tunnel furnace (2), a regenerative incinerator (6) and an extraction circuit (19) of the gas of the tunnel furnace with a flow Q2 at a temperature T2; as well as a dilution air circuit (12) of air entering said tunnel furnace (2) and a heat exchanger (10) preheating dilution air via exchange with purified gas coming from the regenerative incinerator (6); wherein the installation further comprises an additional circuit of injection (14) of hot air at a temperature T1 with a flow Q1 connected to the said circuit of extraction of gas (19) from the tunnel furnace (2) at the regenerative incinerator (6) inlet, such that the inlet flow Q3 is the addition of the injection flow Q1 and extraction flow Q2, and its temperature T3 is higher than the dew point of the volatile organic compounds, wherein the flow Q1 of hot gas at a temperature T1 is taken from the dilution air circuit (12) between said heat exchanger (10) and said tunnel furnace (2).

4. Installation as per claim 3, further comprising an auxiliary burner (11) connected with the injection flow Q1 and designed to raise the injection temperature T1.

5. Installation as per claims 3 and 4, wherein the auxiliary burner (11) is placed in the purified gas circuit (13), at the regenerative incinerator (6) outlet and at the inlet of a heat exchanger (10).

6. Installation as per claims 3 and 4, wherein the auxiliary burner (11) is placed in the dilution circuit (12), between the outlet of a heat exchanger (10) and the connection to the injection circuit (14).

7. Installation as per claims 3 and 4, wherein the auxiliary burner (11) is placed in the injection circuit (14).

## Patentansprüche

1. Verfahren zur Schutz- oder Dekorbeschichtung eines kontinuierlich bewegten Metallbandes (1), bei dem das Band nach der Beschichtung durch elektromagnetische Induktion in einem Backtunnel (2) erwärmt wird, der dazu ausgelegt ist, die Lösungsmittel zu verdampfen und die Beschichtung zu backen; diese Lösungsmittel werden dem Tunnelofen (2) unter Verwendung von Luft kontinuierlich entzogen, wobei das mit einem Strom Q2 und einer Temperatur T2 zu behandelnde resultierende Gas an eine regenerative Verbrennungsanlage (6) abgegeben wird; wobei ein Einspritzstrom Q1 bei einer Einspritztemperatur T1 derart ist, dass ein resultierender Strom Q3 am Eingang (6) der regenerativen Verbrennungsanlage, der die Summe des Einspritzstroms Q1 und des Extraktionsstroms Q2 ist, bei einer Temperatur T3 höher als der Taupunkt der flüchtigen organischen Verbindungen ist; wobei der Strom Q1 Null ist, wenn die Temperatur T2 höher als der Taupunkt der flüchtigen organischen Verbindungen ist, und wobei der Strom Q1 des Heißgases bei einer Temperatur T1 aus einem Verdünnungsluftkreislauf (12) entnommen wird, der sich zwischen einem Wärmetauscher (10) und dem Tunnelofen (2) erstreckt; wobei der Wärmetauscher (10) die Verdünnungsluft durch Austausch mit gereinigtem Gas aus der regenerativen Verbrennungsanlage (6) vorwärmt.

2. Verfahren nach Anspruch 1, wobei die Temperatur T1 mittels eines Hilfsbrenners (11) erhöht wird.

3. Anlage zur Schutz- oder Dekorbeschichtung eines Metallbandes (1) mittels eines Verfahrens nach einem der vorhergehenden Ansprüche, wobei sich das Metallband (1) kontinuierlich durch die Anlage bewegt, wobei die Anlage Folgendes umfasst; einen Tunnelofen (2), eine regenerative Verbrennungsanlage (6) und einen Extraktionskreislauf (19) des Gases des Tunnelofens mit einem Strom Q2 bei einer Temperatur T2; sowie einen Verdünnungsluftkreislauf (12) der in den Tunnelofen (2) eintretenden Luft und einen Wärmetauscher (10), der die Verdünnungsluft durch Austausch mit gereinigtem Gas aus der regenerativen Verbrennungsanlage (6) vorwärmt; wobei die Anlage ferner einen zusätzlichen Kreislauf der Einspritzung (14) von Heißluft bei einer Temperatur T1 mit einem Strom Q1 umfasst, der mit dem Kreislauf der Extraktion von Gas (19) aus dem Tunnelofen (2) am Eingang der regenerativen Verbrennungsanlage (6) verbunden ist, so dass der Einlassstrom Q3 die Summe des Einspritzstroms Q1 und des Extraktionstroms Q2 ist, und seine Temperatur T3 höher ist als der Taupunkt der flüchtigen organischen Verbindungen, wobei der Strom Q1 des Heißgases bei einer Temperatur T1 aus dem Verdünnungsluftkreislauf (12) zwischen dem Wärmetauscher (10) und dem Tunnelofen (2) entnommen wird.

4. Anlage nach Anspruch 3, ferner umfassend einen Hilfsbrenner (11), der mit dem Einspritzstrom Q1 verbunden und zum Erhöhen der Einspritztemperatur T1 ausgelegt ist.

5. Anlage nach den Ansprüchen 3 und 4, wobei der Hilfsbrenner (11) im Reingaskreislauf (13), am Ausgang der regenerativen Verbrennungsanlage (6) und am Eingang eines Wärmetauschers (10) angeordnet ist.

6. Anlage nach den Ansprüchen 3 und 4, wobei der Hilfsbrenner (11) im Verdünnungskreislauf (12) zwischen dem Ausgang eines Wärmetauschers (10) und der Verbindung zum Einspritzkreislauf (14) angeordnet ist.

7. Anlage nach den Ansprüchen 3 und 4, wobei der Hilfsbrenner (11) im Einspritzkreislauf (14) angeordnet ist.

## Revendications

1. Procédé pour le revêtement protecteur ou décoratif d'une bande métallique mobile en continu (1), dans lequel, une fois que la bande a été revêtue, elle est chauffée par induction électromagnétique dans un tunnel de cuisson (2) conçu pour évaporer les solvants et pour cuire le revêtement ; ces solvants sont continuellement extraits du four tunnel (2) en utilisant l'air, le gaz obtenu à traiter avec un débit Q2 et une température T2 est envoyé à un incinérateur régénératif (6) ; dans lequel un débit d'injection Q1 à une température d'injection T1 est tel qu'il en résulte un débit Q3 à l'entrée de l'incinérateur régénératif (6), correspondant à la somme du débit d'injection Q1 et du débit d'extraction Q2, est à une température T3 plus élevée que le point de rosée des composés organiques volatiles ; dans lequel le débit Q1 est de zéro si la température T2 est plus élevée que ledit point de rosée des composés organiques volatiles, et dans lequel le débit Q1 de gaz chaud à une température T1 est prélevé d'un circuit d'air de dilution (12) s'étendant entre un échangeur de chaleur (10) et ledit four tunnel (2); ledit échangeur de chaleur (10) préchauffant l'air de dilution moyennant l'échange avec du gaz purifié provenant de l'incinérateur régénératif (6).

2. Procédé selon la revendication 1, dans lequel la température T1 est augmentée au moyen d'un brûleur auxiliaire (11).

3. Installation pour le revêtement protecteur ou décorateur d'une bande métallique (1) au moyen d'un procédé selon l'une quelconque des revendications précédentes, dans laquelle ladite bande métallique (1) se déplace continuellement à travers l'installation, l'installation comprenant ; un four tunnel (2), un incinérateur régénératif (6) et un circuit d'extraction (19) du gaz du four tunnel avec un débit Q2 à une température T2 ; ainsi qu'un circuit d'air de dilution (12) d'air entrant dans ledit four tunnel (2) et un échangeur de chaleur (10) préchauffant l'air de dilution via l'échange avec du gaz purifié provenant de l'incinérateur régénératif (6) ; dans laquelle l'installation comprend en outre un circuit supplémentaire d'injection (14) d'air chaud à une température T1 avec un débit Q1 raccordé audit circuit d'extraction de gaz (19) du four tunnel (2) à l'entrée de l'incinérateur régénératif (6), de sorte que le débit d'entrée Q3 est la somme du débit d'injection Q1 et du débit d'extraction Q2, et sa température T3 est plus élevée que le point de rosée des composés organiques volatiles, dans laquelle le débit Q1 de gaz chaud à une température T1 est prélevé du circuit d'air de dilution (12) entre ledit échangeur de chaleur (10) et ledit four tunnel (2).

4. Installation selon la revendication 3, comprenant en outre un brûleur auxiliaire (11) raccordé au débit d'injection Q1 et conçu pour augmenter la température d'injection T1.

5. Installation selon les revendications 3 et 4, dans laquelle le brûleur auxiliaire (11) est placé dans le circuit de gaz purifié (13), à la sortie de l'incinérateur régénératif (6) et à l'entrée d'un échangeur de chaleur (10).

6. Installation selon les revendications 3 et 4, dans laquelle le brûleur auxiliaire (11) est placé dans le circuit de dilution (12), entre la sortie d'un échangeur de chaleur (10) et le raccordement au circuit d'injection (14).

7. Installation selon les revendications 3 et 4, dans laquelle le brûleur auxiliaire (11) est placé dans le circuit d'injection (14).
